(19) Europäisches Patentamt
European Patent Office
Office européen des brevets

(11) Publication number: 0 369 663 A2

(12) **EUROPEAN PATENT APPLICATION**

(21) Application number: 89311470.2

(51) Int. Cl.5: G02F 1/133

(22) Date of filing: 06.11.89

(30) Priority: 11.11.88 JP 283761/88

(43) Date of publication of application: 23.05.90 Bulletin 90/21

(84) Designated Contracting States: DE FR GB IT

(71) Applicant: International Business Machines Corporation
Old Orchard Road
Armonk, N.Y. 10504(US)

(72) Inventor: Ikeda, Ayumi
Mezon Shimokita 208 1-9-14 Ohohara
Setagaya-ku Tokyo-to(JP)
Inventor: Koseki, Toshihiko
Makigahara 60 Asahi-ku
Yokohama-shi Kanagawa-ken(JP)
Inventor: Ueki, Toshihiro
3-24-9-208 Naka-machi
Machida-shi Tokyo-to(JP)

(74) Representative: Burt, Roger James, Dr.
IBM United Kingdom Limited Intellectual
Property Department Hursley Park
Winchester Hampshire SO21 2JN(GB)

(54) **Colour liquid crystal display.**

(57) A colour liquid crystal display having a filter/ orientation film which functions both as an orientation layer controlling the orientation of liquid crystal molecules and as a colour filter, in which said film has recurring polyimide units represented by one of the following four general formulae:

EP 0 369 663 A2

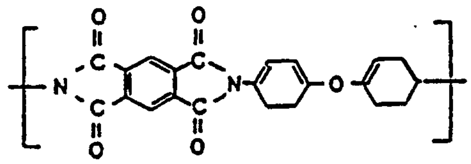

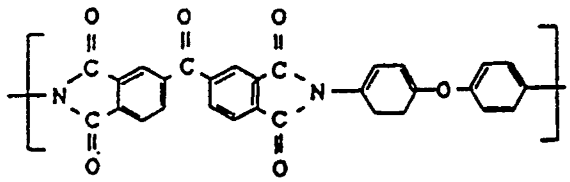

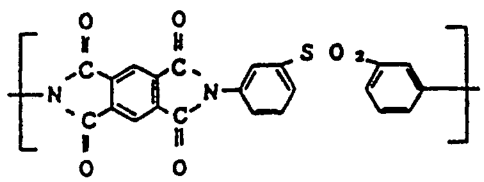

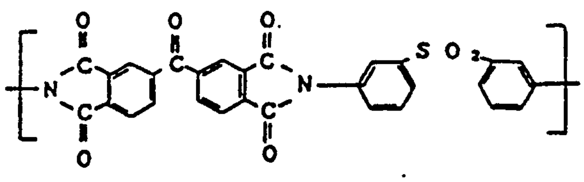

# Colour Liquid Crystal Display

The present invention relates to a colour liquid crystal display having a film which functions both as an orientation layer controlling the orientation of liquid crystal molecules and as a colour filter.

Japanese Published Unexamined Patent Application No. 59-29225 (Japanese Patent Application No. 57-138450) discloses the formation of a colour filter by printing predetermined patterns of each colour with ink compositions, synthesized by mixing a polyimide resin and colouring materials such as azo or anthraquinone dyes, on each surface of a pair of glass substrates on which transparent electrodes are formed, and the use of the colour filter also as an organic orientation film; and also discloses the formation of a colour filter by printing polyimide on each surface of a pair of glass substrates on which transparent electrodes are formed to give a resin film, forming predetermined patterns with photographic technology, and immersing the resin film with the predetermined patterns in a solvent in which a colourant is dissolved to disperse the colourant in the resin film, and the use of the colour filter also as an organic orientation film.

Japanese Published Unexamined Patent Application No. 60-48020 (Japanese Patent Application No. 58-154803) discloses a colour liquid crystal display having a colour filter formed by mixing dyes in a polyimide based polymer on transparent electrodes formed on a glass substrate, and providing the colour filter with liquid crystal orientation by rubbing.

Although the above prior art methods are intended to give a polyimide film functioning as both an orientation layer which controls the orientation of liquid crystal molecules, and a colour filter, it has been found that all polyimides cannot have both a liquid crystal orientation function and a colour filter function. For example, a diacid anhydride formed by bonding two molecules of trimellitic acid, or amide diamine synthesized from a dicarboxylic acid and a diamine cannot be used practically, even if dyes are mixed to these compounds, because of their poor liquid crystal orientation and poor spectroscopic light transmissivity.

It is an object of this invention to provide a liquid crystal colour display having a layer with functions both as a colour filter of good spectroscopic light transmissivity, i.e., a high colour purity and as a uniform liquid crystal orientation layer. The present invention further provides a method of manufacture thereof.

The film having both the function of an orientation layer which controls the orientation of liquid crystal molecules and the function of a colour filter, according to this invention, comprises a polyimide having recurring units represented by one of the following four general formulae:

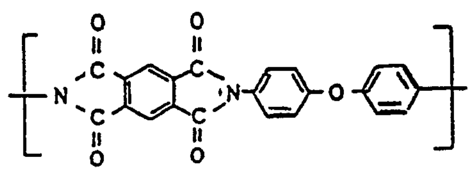

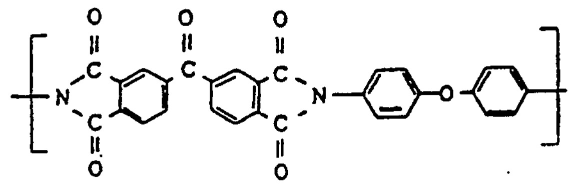

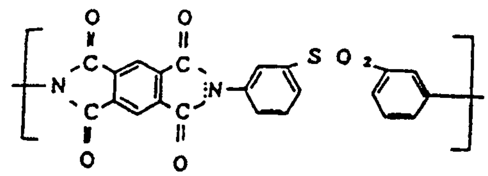

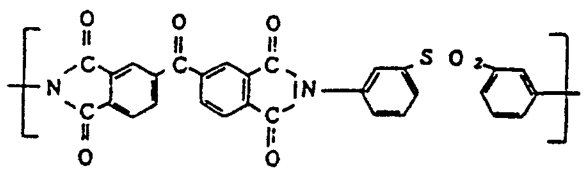

The polyimide of this invention can be obtained by the condensation polymerization reaction of a diamine component having the following structure:
$H_2N - C_6H_5 - X - C_6H_5 - NH_2$
(where X is $-SO_2-$ or -O-),
and an acid anhydride component having the following structure:

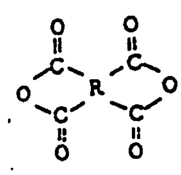

(where R is a phenyl or benzophenone radical).

An organic film having the above recurring units, and functioning both as a colour filter and as a liquid crystal orientation layer, is suitably prepared by synthesizing a polyimide precursor by the ring-opening polyaddition reaction of the above components in a solvent, dispersing dyes in the polyimide precursor, applying the dispersion to the surface of a glass substrate for liquid crystal display elements, and drying and heat-treating the glass substrate.

As described above, according to this invention, a film is provided with both the function of a colour filter with a high colour purity and the function of uniform liquid crystal orientation.

One way of carrying out the invention is described in detail below with reference to the drawing which illustrates one specific embodiment of the invention, in which:

Figure 1 is a cross-sectional view of a colour liquid crystal display.

The colour liquid crystal display 2 has a pair of transparent glass substrates 4 and 6 separated by a certain distance. On the picture element location inside the glass substrate 4 are provided transparent display electrodes 8 consisting, for example, of ITO. On the picture element location inside the glass substrate 4 are also provided transparent display electrodes 10 consisting, for example, of ITO. On the display electrode 8 provided on the red picture element location, a red filter/orientation film 16R is formed which has both the function of an orientation layer controlling the orientation of liquid crystal molecules and

the function of a red colour filter. On the display electrode 8 provided on the green picture element location, a green filter/orientation film 16G is formed which has both the function of an orientation layer controlling the orientation of liquid crystal molecules and the function of a green colour filter. On the display electrode 8 provided on the blue picture element location, a blue filter/orientation film 16B is formed which has both the function of an orientation layer controlling the orientation of liquid crystal molecules and the function of a blue colour filter.

On the display electrode 10 is provided an orientation film 18 which controls the orientation of liquid crystal molecules. The rubbing direction (orientation) of filter/orientation films 16R, 16G and 16B differs from that of the orientation film 18 by 90 degrees. Between filter/orientation films 16R, 16G and 16B, and the orientation film 18 is a liquid crystal layer 20 which is torsion-oriented by 90 degrees.

A polarizing plate 12 is provided outside the glass substrate 4, and a polarizing plate 14 is provided outside the glass substrate 6. The polarizing direction of the polarizing plate 12 matches that of the polarizing plate 14. The polarizing direction of the polarizing plate 12 is the same as the rubbing direction of filter/orientation films 16R, 16G and 16B. The polarizing direction of the polarizing plate 14 differs from the rubbing direction of the orientation film 18 by 90 degrees. Thus, the colour liquid crystal display 2 operates in a normally black mode.

A polyimide is synthesized from a diamine and an acid anhydride. The structure of a polyimide is determined by the combination of these materials. As the result of examination of spectrophotographic properties and liquid crystal orientation using various polyimides synthesized from different diamines and acid anhydrides in which coloring materials are dispersed, the polyamides synthesized from the following diamine components and acid anhydride components have been found to be suitable for use as the filter/orientation films 16R, 16G and 16B.

Diamine Component

1. 3,3'-diaminodiphenyl sulfone

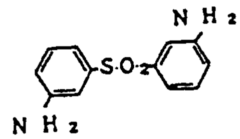

2. 4,4'-diaminodiphenyl ether

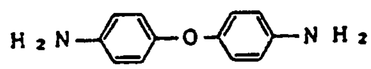

Acid Anhydride Component

1. Benzophenone tetracarboxylic dianhydride

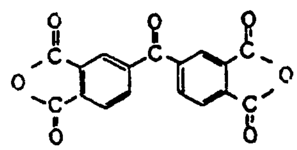

2. Pyromellitic dianhydride

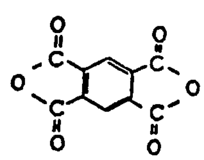

A polyimide synthesized from the above diamine components and acid anhydride components has recurring units represented by one of the following general formulae:

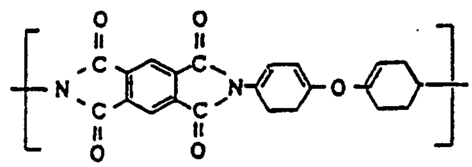

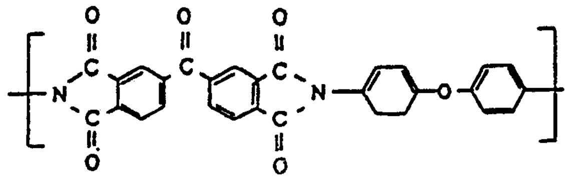

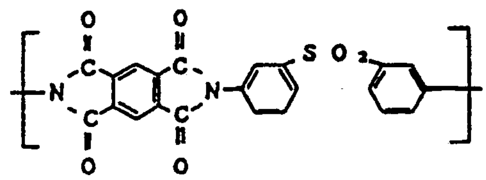

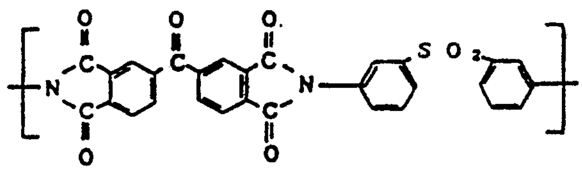

To the above four types of polyimides, the following colouring materials were added to prepare samples:

Red : Solvent Red 122

Green: Solvent Yellow 21 - Solvent Blue 25 (5:4)

Blue : Acid Blue 129

The dispersion properties of the above colouring materials in different polyimides differed from each other, and the preferred combinations are as follows:

Red : Combination of 4,4′-diaminodiphenyl ether and pyromellitic dianhydride;

Green: Combination of 3,3′ -diaminodiphenyl sulfone and benzophenone tetracarboxylic dianhydride;

Blue : Combination of 3,3′-diaminodiphenyl sulfone and benzophenone tetracarboxylic dianhydride.

The structural formulae of the respective polyimides are as follows:

Red:

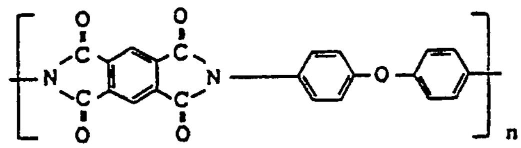

Green and Blue:

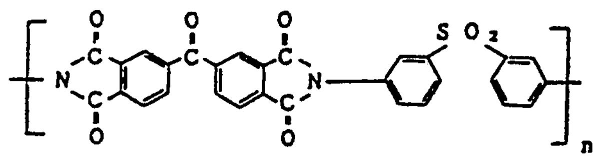

Suitably the amount of the colour materials is 5 to 20% by weight of the solid resin; a silane coupling agent for the improvement of adhesion and a solvent (polar non-proton solvent such as benzene, cyclohexanone and methyl cellosolve) for viscosity adjustment are added.

The silane coupling agent may be added to the polyimide precursor, or a film of the silane coupling agent may be intervened between filter/orientation films 16R, 16G and 16B, and the glass substrate 4.

An embodiment of the process for producing a colour liquid crystal display as shown in Figure 1 will be described in relation to the fabrication of filter/ orientation films 16R, 16G and 16B. First, the 4,4′-diaminodiphenyl ether, pyromellitic dianhydride (mol ratio = 1:1) and N-methyl-2-pyrrolidone undergo a ring-opening polyaddition reaction in a flask to obtain a polyimide precursor. The polyimide precursor is diluted with a solvent, and 15% by weight of Solvent Red 122 for the solid resin is evenly dispersed to prepare a solution for the red filter. Next, 3,3′-diaminodiphenyl sulfone and benzophenone tetracarboxylic dianhydride (mol ratio = 1:1) are allowed to react to obtain another polyimide precursor. The polyimide precursor is diluted with a solvent, and 10% by weight of a mixture of Solvent Yellow 21 and Solvent Blue 25 (5:4) is evenly dispersed to prepare a solution for the green filter. Also, 3,3′-diaminodiphenyl sulfone and benzophenone tetracarboxylic dianhydride (mol ratio = 1:1) are allowed to react to obtain a polyimide precursor. The polyimide precursor is diluted with a solvent, and 8% by weight of Acid Blue 129 is evenly dispersed to prepare a solvent for the blue filter. To each of the three polyimide precursor solutions, 0.5% by weight of an amino silane coupling agent is added and stirred to obtain a material for forming a colour filter/liquid crystal orientation film.

A glass substrate 4, on which the predetermined patterns of display electrodes 8 was formed, was spin-coated with the solution for the red filter, prebaked, then spin-coated with a positive resist, and prebaked. The positive resist was exposed to ultraviolet rays through a predetermined photomask. The positive resist was then developed, etched with an aqueous solution of sodium hydroxide, rinsed, dried and removed to form a red filter/orientation film 16R. After postbaking, a green filter/orientation film 16G was formed using the solution for the green filter, and a blue filter/orientation film 16B was formed in a similar way.

The predetermined patterns of display electrodes 10 were formed on the glass substrate 6 facing the glass substrate 4, and a known polyimide orientation film (e.g., JIB manufactured by Japan Synthetic Rubber Co.) was formed. The two substrates were rubbed in the predetermined direction and heat-sealed with a sealant such as an epoxy resin, and a liquid crystal (e.g., ZLI-3449-100 manufactured by Merck & Co.) was injected between them. As a result, a colour reproduction area of 70% of the NTSC area, and having uniform orientation without reverse domain, even under a polarization microscope, were confirmed.

Although dyes were used in the above embodiment, any coloring materials such as pigments may be used.

The above description is for a normally-black twisted nematic liquid crystal display. However, it will readily be understood by those skilled in the art that this invention can be applied to a normally-white twisted nematic liquid crystal display in which the polarizing direction of the polarization plate 12 matches the orientation of filter/orientation films 16R, 16G and 16B; the polarizing direction of the polarization plate 14 matches the orientation of filter/orientation films 16R, 16G and 16B; and the orientation of filter/ orientation films (16R, 16G and 16B differs from the orientation of the orientation film 18 by 90 degrees.

It will also be understood by those skilled in the art that this invention is not limited to a twisted nematic liquid crystal display but may be applied to any colour liquid crystal display that requires orientation.

## Claims

1. A filter/ orientation film for a colour liquid crystal display wherein the film functions both as an orientation layer controlling the orientation of liquid crystal molecules and as a colour filter, in which said film has recurring polyimide units represented by one of the following four general formulae:

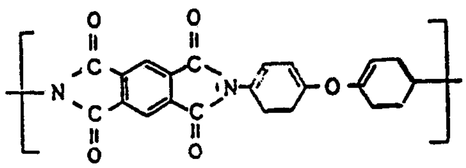

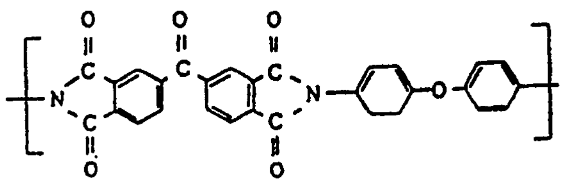

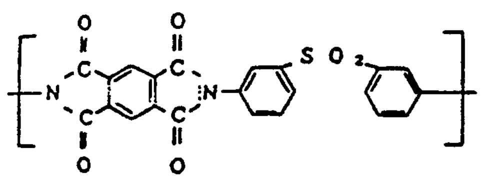

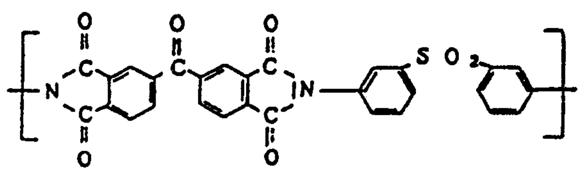

2. A film as claimed in claim 1 wherein the polyimide is the combination of 4,4′-diaminodiphenyl ether and pyromellitic dianhydride.

3. A film as claimed in claim 1 wherein the polyimide is the combination of 3,3′-diaminodiphenyl sulfone and benzophenone tetracarboxylic dianhydride.

4. A colour liquid crystal display having a filter/ orientation film which functions both as an orientation layer controlling the orientation of liquid crystal molecules and as a colour filter, in which said film has recurring polyimide units represented by one of the following four general formulae:

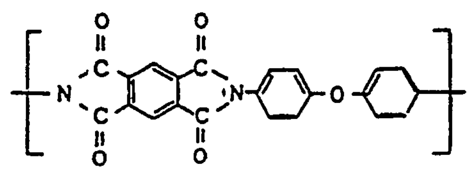

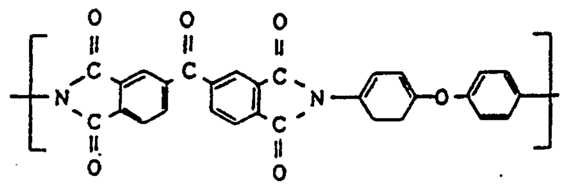

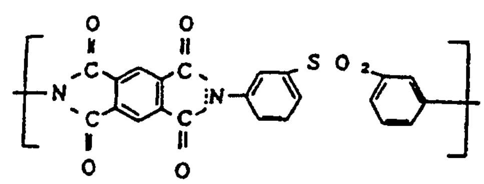

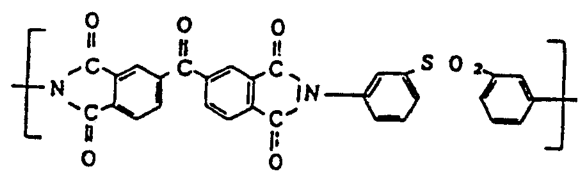

5. A display as claimed in claim 4 having a red filter/ orientation film wherein the film contains Solvent Red 122.

6. A display as claimed in claim 4 or claim 5 having a green filter/orientation film wherein the film contains Solvent Yellow 21 and Solvent Blue 25 in the ratio 5:4 by weight.

7. A display as claimed in any one of claims 4, 5, or 6 having a blue filter/ orientation film wherein the film contains Acid Blue 129.

8. A display as claimed in any any one of claims 5, 6, or 7 wherein the amount of the colour material is 5 to 20% by weight of the polyimide.

9. A process for producing a filter/ orientation film for a colour liquid crystal display wherein the film functions both as an orientation layer controlling the orientation of liquid crystal molecules and as a colour filter, comprising the steps of:
synthesizing a polyimide precursor by the ring-opening polyaddition reaction of a diamine component having the following structure:
$H_2N - C_6H_5 - X - C_6H_5 - NH_2$
(where X is $-SO_2-$ or -O-)
and an acid anhydride component having the following structure:

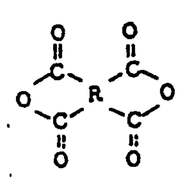

(where R is a phenyl or benzophenone group) in a solvent and;
dispersing colouring materials in the polyimide precursor to form the film.

10. A process for producing a colour liquid crystal display having a fitcr/ orientation film which functions both as an orientation layer controlling the orientation of liquid crystal molecules and as a colour filter, comprising the steps of:
synthesizing a polyimide precursor by the ring-opening polyaddition reaction of a diamine component having the following structure:
$H_2N - C_6H_5 - X - C_6H_5 - NH_2$
(where X is $-SO_2-$ or -O-)
and an acid anhydride component having the following structure:

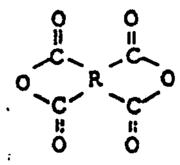

(where R is a phenyl or benzophenone group) in a solvent;
dispersing colouring materials in the polyimide precursor to form the film; and
applying the film to a display electrode.

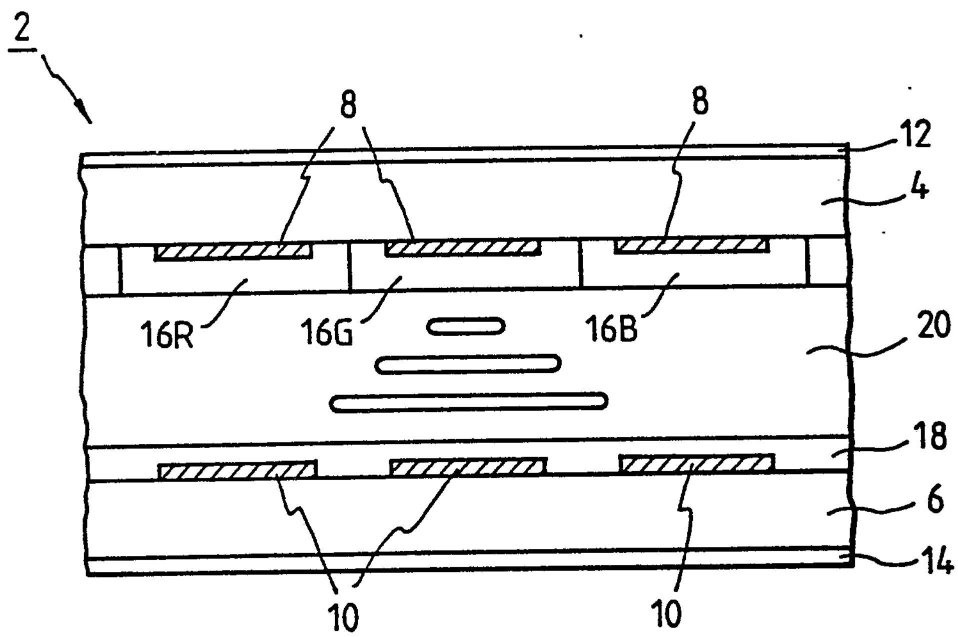


FIG. 1